# EUROPÄISCHE PATENTSCHRIFT

(11) **EP 2 871 405 B1**
(45) Veröffentlichungstag und Bekanntmachung des Hinweises auf die Patenterteilung: **19.04.2023**
(21) Anmeldenummer: 14189566.4
(22) Anmeldetag: 20.10.2014
(51) Int. Cl.: F21S 43/241, F21S 43/239, F21S 43/243, F21V 8/00

(54) **Lichtleiter, Lichtleiterstruktur und Kfz-Beleuchtungseinrichtung**
Optical fibre, optical fibre structure and vehicle lighting device
Conducteur lumineux, structure de conducteur lumineux et dispositif d'éclairage de véhicule

(30) Priorität: 08.11.2013 DE 102013222794
(43) Veröffentlichungstag der Anmeldung: 13.05.2015
(73) Patentinhaber: Marelli Automotive Lighting Reutlingen (Germany) GmbH, 72762 Reutlingen (DE)
(72) Erfinder: Zwick, Hubert, 701784 Stuttgart (DE); Kellermann, Hermann, 72762 Reutlingen (DE)
(74) Vertreter: DREISS Patentanwälte PartG mbB

(56) Entgegenhaltungen:
- EP-A2- 1 674 789
- EP-A2- 2 607 774
- DE-A1- 10 231 326
- DE-A1-102010 061 210
- DE-A1-102011 018 508
- GB-A- 2 274 158
- US-A1- 2004 027 833
- US-A1- 2005 111 235

## Beschreibung

Die Erfindung betrifft einen Lichtleiter nach dem Oberbegriff des Anspruchs 1, sowie eine Lichtleiterstruktur nach Anspruch 7 und eine Beleuchtungseinrichtung für Kraftfahrzeuge (Kfz) gemäß dem Anspruch 8.

Bei den betrachteten Anwendungen soll mit dem Lichtleiter eine erleuchtete Kontur erzeugt werden. Der Lichtleiter weist dabei eine sich vorzugsweise länglich erstreckende Lichtauskoppelfläche auf. Aus der DE 10 2011 089 575 B3 ist ein Lichtleiter mit den Merkmalen des Oberbegriffs des Anspruchs 1 bekannt. Dabei ist die Umlenkfläche des Lichtleiters in einem Abschnitt entlang ihrer Erstreckung von dem Lichteinleitbereich zu dem Auskoppelabschnitt des Lichtleiters in zwei Teilflächen unterteilt. Die Teilflächen verlaufen im Wesentlichen parallel zueinander.Dabei ist eine Teilfläche bezüglich der anderen in Richtung zum Innern des Lichtleitbereichs versetzt.

Bei einem Kraftfahrzeug trägt die Beleuchtungseinrichtung wesentlich zum stilistischen Erscheinungsbild bei. Es besteht zunehmend Bedarf, das Beleuchtungsbild im Betriebszustand der Beleuchtungseinrichtungen nach designtechnischen Gesichtspunkten zu gestalten. Außerdem kann es gewünscht sein, mit dem Beleuchtungsbild einer Beleuchtungseinrichtung einen Hinweis auf die betriebliche Herkunft oder den Fahrzeugtyp zu vermitteln.

Neben der äußeren Form der Beleuchtungseinrichtung kann dies durch eine charakteristische Form einer Lichtabgabefläche geschehen, z.B. bei einem Tagfahrlicht oder einer Leuchte. Hierzu kann es insbesondere erwünscht sein, der Lichtabgabefläche einen gekrümmten und länglichen Verlauf zu geben, oder eine gewinkelt verlaufende Leuchtkontur zu erzeugen. Bei modernen

Beleuchtungseinrichtungen ist es oftmals zudem erwünscht, die Lichtabgabefläche mit einer starken Pfeilung im Fahrzeug anzuordnen, d.h. eine starke Abweichung von der senkrechten Ausrichtung der Abgabefläche zur Hauptabtstrahlrichtung bzw. zur Fahrtrichtung vorzusehen. Dabei soll das Licht in der Regel durch die Lichtabgabefläche dennoch im Wesentlichen parallelisiert austreten.

Die DE 10 2011 018508 A1, GB 2 274 158 A und die US 2004/027833 A1 zeigen bekannte Lichtleiter für eine Kfz-Beleuchtungseinrichtung.

Bei den beschriebenen Ausgestaltungen kann das Problem auftreten, dass die gekrümmt oder gewinkelt verlaufende und längliche Lichtabgabefläche nicht mehr homogen ausgeleuchtet ist. Entlang des Verlaufs der länglichen Lichtabgabefläche können sich erhebliche Intensitätsunterschiede ergeben. Außerdem kann es bei den beschriebenen Ausgestaltungen zu Abweichungen von der gewünschten Parallelisierung der Abstrahllichtverteilung kommen.

Der Erfindung liegt die Aufgabe zugrunde, bei Beleuchtungseinrichtungen die Gestaltungsfreiheit für die Formung der Lichtabgabefläche zu erhöhen und dabei eine möglichst homogene Ausleuchtung der Lichtabgabefläche sowie ggf. eine entsprechend gesetzlichen Vorgaben geformte Abstrahllichtverteilung zu erzielen.

Diese Aufgabe wird durch einen Lichtleiter gemäß Anspruch 1 gelöst. Dieser ist flächig ausgebildet und weist insofern zwei gegenüberliegende breite Seitenflächen sowie weitere, sich zwischen den breiten Seitenflächen erstreckende schmale Seitenflächen auf. Die breiten Seitenflächen bilden eine breite erste Lichtleitfläche und eine dieser gegenüberliegende breite zweite Lichtleitfläche des Lichtleiters.

Der Lichtleiter umfasst mehrere, im Strahlengang aufeinanderfolgende Abschnitte, nämlich einen Parallelisierungsabschnitt, einen an diesen im Strahlengang anschließenden Umlenkabschnitt und einen hieran im Strahlengang anschließenden Auskoppelabschnitt. Der Parallelisierungsabschnitt weist einen Lichteinleitbereich zum Speisen des Lichtleiters mit Licht auf. Er ist dazu ausgebildet, das durch den Lichteinleitbereich eingespeiste Licht zu parallelisieren, d.h. in eine Lichtverteilung umzuformen, welche in Projektion auf die Erstreckungsfläche des Parallelisierungsabschnitts im Wesentlichen aus parallelen Lichtstrahlen besteht. Der Auskoppelabschnitt weist eine sich zwischen den breiten Lichtleitflächen erstreckende und diese vorzugsweise verbindende, schmale, insbesondere bandartige, Lichtauskoppelfläche auf.

Der Umlenkabschnitt weist eine Umlenkfläche auf, welche an einer sich in Richtung von dem Parallelisierungsabschnitt zu dem Auskoppelabschnitt erstreckenden, schmalen Seitenfläche des Lichtleiters ausgebildet ist. Die Umlenkfläche ist dazu eingerichtet, das von dem Parallelisierungsabschnitt kommende Licht zu der Auskoppelfläche hin umzulenken.

Die Umlenkfläche ist mehrteilig und gestuft ausgebildet. Die Umlenkfläche umfasst hierzu eine Mehrzahl von Reflexionsflächen und Mehrzahl von Versatzflächen. Die Reflexionsflächen sind zur Reflexion von Lichtstrahlen zu dem Auskoppelabschnitt eingerichtet. Zwischen je zwei benachbarten Reflexionsflächen ist zumindest eine Versatzfläche derart angeordnet, so dass die Reflexionsflächen entlang des Verlaufs der Umlenkfläche von dem Parallelisierungsabschnitt zu dem Auskoppelabschnitt stufenartig versetzt zueinander angeordnet sind. Vorzugsweise ist jeweils genau eine Versatzfläche zwischen zwei benachbarten Reflexionsflächen angeordnet. Denkbar sind jedoch auch Ausgestaltungen, bei welchen zwischen manchen Reflexionsflächen oder zwischen allen Reflexionsflächen jeweils mehrere Versatzflächen angeordnet sind, beispielsweise um größere Stufen auszubilden.

Die gestufte Umlenkfläche (mit ihren zwischen den Reflexionsflächen gebildeten Stufen) erstreckt sich entlang einer gekrümmten Umlenkleitkurve, die bezüglich zweier verschiedener Raumrichtungen gekrümmt ist. Die Umlenkleitkurve verläuft insbesondere von dem Parallelisierungsabschnitt zu dem Auskoppelabschnitt. Insofern sind die einzelnen Reflexionsflächen entlang der genannten Umlenkleitkurve aufgereiht. Beispielsweise ist die Umlenkleitkurve S-förmig.

Eine Krümmung einer Kurve bezüglich einer Raumrichtung liegt im vorliegenden Sinne beispielsweise vor, wenn sich für die Tangente an die Kurve die Richtungskomponente parallel zu der genannten Raumrichtung bei Fortschreiten entlang der Kurve ändert.

Durch eine geeignete Wahl der Umlenkleitkurve kann erreicht werden, dass durch die Lichtauskoppelfläche parallelisiertes Licht mit räumlich konstanter Intensität austritt, auch wenn die Lichtauskoppelfläche aus gestalterischen Gründen eine gekrümmte oder mehrfach gekrümmte Form aufweisen soll.

Eine Krümmung der Umlenkleitkurve bezüglich zweier verschiedener Raumrichtungen wird dadurch erreicht, dass der Umlenkabschnitt als Ganzes zwar plattenartig, jedoch nicht eben ausgebildet ist. Dann verlaufen die erste und die zweite Lichtleitfläche im Bereich des Umlenkabschnitts nicht eben, sondern gewölbt. Diese Wölbung gibt eine erste Krümmungsrichtung der Umlenkfläche vor. Darüber hinaus kann die Umlenkfläche auch in Projektion auf beispielsweise die erste Lichtleitfläche (oder entsprechend auf die zweite Lichtleitfläche) gekrümmt verlaufen, was eine zweite Krümmungsrichtung vorgibt.

Bei dem Lichtleiter ist eine im Verlauf entlang des Strahlengangs durch den Lichtleiter gestufte Umlenkfläche vorgesehen. Diese wird mittels des Parallelisierungsabschnitts mit in dem Lichtleiter geleitetem, parallelisiertem Licht bestrahlt. Die eigentliche Umlenkung des Lichts erfolgt mittels der Reflexionsflächen. Diese sind durch die Versatzflächen voneinander beabstandet. Durch diese Aufteilung der Umlenkfläche ist es möglich, das in dem Lichtleiter geleitete Licht derart auf die längliche Lichtauskoppelfläche zu lenken, dass das austretende Licht nicht nur parallelisiert ist, sondern auch einen im Wesentlichen konstanten Intensitätsverlauf entlang der Erstreckung der Lichtauskoppelfläche aufweist. Insbesondere können räumliche Variationen in der Intensitätsverteilung auf der Lichtauskoppelfläche durch geeignete Ausgestaltung der einzelnen Reflexionsflächen kompensiert werden und so der gewünschte Intensitätsverlauf erzielt werden. Eine gleichmäßige und homogene Ausleuchtung der Lichtauskoppelfläche ist daher möglich, auch wenn diese einen z.B. aus stilistischen Gründen erwünschten, gewölbten oder auch mehrfach gewölbten Verlauf aufweist.

Die zur Lichtumlenkung wirkenden Reflexionsflächen der Umlenkfläche werden durch den Parallelisierungsabschnitt mit Licht bestrahlt. Da die Umlenkfläche in der genannten Weise unterteilt ist, können einzelne Teilbündel des Lichts mit räumlichem Versatz und mit unterschiedlichen Umlenkungswinkeln zu der Auskoppelfläche gelenkt werden. Daher können zu helle Bereiche der Lichtauskoppelfläche abgedunkelt und zu dunkle Bereiche aufgehellt werden. Die Reflexionsbereiche der Umlenkfläche sind durch die Versatzflächen voneinander getrennt. Dadurch kann ein vergleichsweise größerer Winkelbereich homogen ausgeleuchtet werden. Im Vergleich zu ähnlichen Lichtleitern mit durchgehender und nicht unterteilter Umlenkfläche kann so bei dem Lichtleiter eine Lichtauskoppelfläche mit größerer länglicher Ausdehnung erzielt werden. Es ist dann eine homogene Lichtverteilung über die gesamte Länge der ausgedehnten Lichtauskoppelfläche möglich.

Die Reflexionsflächen und Versatzflächen sind definierte Bereiche der Umlenkfläche und beispielsweise als von Kanten begrenzte Flächenabschnitte der Umlenkfläche ausgebildet. Insofern ist die Umlenkfläche vielteilig aus jeweils abwechselnd aneinander anstoßenden Reflexionsflächen und Versatzflächen ausgebildet. Vorzugsweise stoßen benachbarte Reflexionsflächen und Versatzflächen derart aneinander, dass die Umlenkfläche am Übergang entlang der jeweils begrenzenden Kanten von Reflexionsfläche bzw. Versatzfläche einen Knick aufweist. Dadurch kann die erwähnte Stufenstruktur gebildet werden. Dies schließt aber nicht aus, dass die Reflexionsflächen und die Versatzflächen selbst ebenfalls einen in sich geknickten oder gewölbten Verlauf aufweisen.

Die Abschnitte des Lichtleiters sind vorzugsweise alle plattenartig ausgebildet. Der Lichtleiter als Ganzes ist insofern ein dünnwandiges Gebilde. Die Abschnitte sind insbesondere sämtlich einstückig miteinander verbunden, so dass der Lichtleiter z.B. als zusammenhängendes Spritzgussteil hergestellt werden kann. Als Material kommen beispielsweise transparente Kunststoffe oder Glas in Frage.

Manche der Abschnitte des Lichtleiters können ganz oder teilweise eben ausgebildet sein. Dann sind die erste und die zweite Lichtleitfläche vorzugsweise als parallel zueinander verlaufende Ebenen ausgebildet. Die ebenen Lichtleitflächen können jedoch auch zumindest abschnittsweise einen Öffnungswinkel miteinander einschließen, so dass sich der Querschnitt des Lichtleiters entlang des Strahlengangs erweitert, um eine Parallelisierung der in dem Lichtleiter geleiteten Lichtbündel herbeizuführen.

Mit einem gewölbten Auskoppelabschnitt kann eine gekrümmt verlaufende Lichtauskoppelfläche erzielt werden. Durch eine Wölbung des Umlenkabschnitts, des Auskoppelabschnitts und/oder des Parallelisierungsabschnitts kann außerdem eine Anpassung des Lichtleiters an Bauraumvorgaben in einer Kfz-Beleuchtungseinrichtung erfolgen.

Durch den Lichtleiter pflanzt sich das durch den Lichteinlassbereich eingeleitete Licht durch den Parallelisierungsabschnitt, den Umlenkabschnitt, den Auskoppelabschnitt zu der Lichtauskoppelfläche u.a. mittels interner Totalreflexion zwischen den breiten Seitenflächen (Lichtleitflächen) aus. Insofern dienen die breiten Seitenflächen (Lichtleitflächen) in erster Linie zur Weiterleitung des Lichts, während die schmalen Seitenflächen optische Funktionen als Umlenkfläche, Lichtauskoppelfläche, Einkoppelfläche oder Parallelisierungsfläche bereitstellen, wie unten noch näher erläutert. Für die einzelnen Lichtstrahlen können aufgrund der vielfachen Totalreflexion zwischen den Seitenflächen, insbesondere zwischen den breiten Lichtleitflächen, vielfache Richtungsänderungen auftreten. Im räumlichen Mittel lässt sich jedoch für das sich fortpflanzende Licht ein Strahlengang durch den Lichtleiter definieren. Entlang des Strahlengangs wird im Mittel die Lichtenergie transportiert. Der Strahlengang verläuft ausgehend von dem Lichteinleitbereich innerhalb des plattenartigen Lichtleiters zur Lichtauskoppelfläche.

Das Licht gelangt vorzugsweise nicht direkt, sondern nur indirekt von dem Lichteinleitbereich zur Lichtauskoppelfläche. Insbesondere findet Reflexion im Umlenkabschnitt statt. Durch eine geeignete Ausgestaltung das Licht wie erläutert so umgeformt werden, dass es im Wesentlichen parallelisiert auf die Lichtauskoppelfläche trifft. Die gewünschte Lichtverteilung kann dann durch Brechung beim Durchtritt durch die Lichtauskoppelfläche oder mittels an dieser angeordneten Streustrukturen erzielt werden. Denkbar ist auch ein paralleler Durchtritt durch die Lichtauskoppelfläche und eine weitere Lichtformung mittels einer nachgelagerten Sekundäroptik.

Die Versatzflächen sind vorzugsweise derart angeordnet, dass solche Lichtstrahlen, welche durch den Lichteinleitbereich in dem Parallelisierungsabschnitt eingespeist werden und zu der Umlenkfläche geleitet werden, ausschließlich auf die Reflexionsflächen, nicht jedoch auf die Versatzflächen treffen. Insofern sind die Versatzflächen für das parallelisierte Licht aus dem Parallelisierungsabschnitt "verschattet", d.h. die parallelisierten Lichtstrahlen aus dem Parallelisierungsabschnitt treffen nicht auf die Versatzflächen. Die Versatzflächen dienen in diesem Fall im Wesentlichen dazu, die optisch wirksamen Reflexionsflächen räumlich voneinander zu trennen, um das Licht mit einer geeigneten Lichtverteilung zu der Lichtauskoppelfläche zu leiten.

Vorzugsweise verbindet die schmale Seitenfläche des Lichtleiters, an welcher die Umlenkfläche ausgebildet ist, die erste und die zweite Lichtleitfläche und grenzt insofern einerseits an die erste Lichtleitfläche und andererseits an die zweite Lichtleitfläche an. Insbesondere erstrecken sich die Reflexionsflächen und die Versatzflächen jeweils vollständig von der ersten Lichtleitfläche zu der zweiten Lichtleitfläche und verbinden diese jeweils miteinander. Die Reflexionsflächen und die Versatzflächen erstrecken sich insofern vorzugsweise über die volle Dicke des plattenartigen Lichtleiters.

Die Reflexionsflächen und/oder Versatzflächen verlaufen zwischen der ersten Lichtleitfläche und der zweiten Lichtleitfläche vorzugsweise gerade. Sie können als ebene Flächenabschnitte der Umlenkfläche ausgebildet sein. Dabei schließen verschiedene Reflexionsflächen und/oder Versatzflächen miteinander vorzugsweise einen nicht verschwindenden Winkel ein.

Vorzugsweise ist die erste Lichtleitfläche von einem ersten, insbesondere umlaufenden, Rand begrenzt und die zweite Lichtleitfläche von einem zweiten, insbesondere umlaufenden, Rand begrenzt. Im Sinne der oben genannten Ausgestaltungen kann dann vorgesehen sein, dass jede der Reflexionsflächen und der Versatzflächen ebenfalls an den ersten Rand und an den zweiten Rand angrenzt.

Der Lichtleiter ist vorzugsweise derart ausgebildet, dass das durch den Lichteinleitbereich eingespeiste Licht durch die Lichtauskoppelfläche um eine Hauptabstrahlrichtung herum parallelisiert austritt. Dabei ist die Umlenkfläche vorzugsweise derart ausgebildet, dass die Reflexionsflächen in Projektion auf eine Betrachtungsebene senkrecht zur Hauptabstrahlrichtung betrachtet jeweils denselben Abstand voneinander haben. Dabei können die einzelnen Reflexionsflächen und/oder Versatzflächen unterschiedliche Abmessungen haben und/oder entlang einer gekrümmten Umlenkleitkurve aufgereiht sein, wie oben beschrieben. Durch die genannten Ausgestaltungen kann eine homogenisierte Lichtverteilung auf der Lichtauskoppelfläche erzielt werden.

Für den Auskoppelabschnitt sind verschiedene Ausgestaltungen denkbar. Einerseits kann der Auskoppelabschnitt plattenartig und sich eben erstreckend ausgebildet sein. Die Lichtauskoppelfläche kann eben sein, beispielsweise senkrecht zur Erstreckungsebene des Auskoppelabschnitts orientiert sein. Denkbar ist jedoch auch ein gekrümmter Verlauf. Ist der Auskoppelabschnitt nicht eben, sondern von gekrümmten Lichtleitflächen begrenzt, so kann sich die als schmale Seitenfläche zwischen den Lichtleitflächen ausgebildete Lichtauskoppelfläche ebenfalls aus einer gedachten Ebene herauswölben.

Insbesondere ist vorgesehen, dass die Lichtauskoppelfläche sich bandartig entlang einer gekrümmten, z.B. bezüglich zweier verschiedener Raumrichtungen gekrümmten, Auskoppelleitkurve erstreckt. Mit dem Lichtleiter lässt sich so eine leuchtende Kontur erzeugen, die den designtechnischen Anforderungen entspricht.

Die Auskoppelleitkurve kann dabei z.B. innerhalb einer gedachten Ebene verlaufen, in der sich der plattenartige Auskoppelabschnitt erstreckt. Die Auskoppelleitkurve kann beispielsweise konvex oder konkav in Bezug auf das Innere des Auskoppelabschnitts verlaufen. Denkbar ist aber auch eine Krümmung aus einer gedachten Ebene heraus. In diesem Fall kann der Umlenkabschnitt und die Umlenkfläche entsprechend aus einer Ebene heraus gewölbt verlaufen, um die ebenfalls gewölbte Lichtauskoppelfläche wie gewünscht auszuleuchten.

Nach einer vorteilhaften Ausgestaltung verläuft die Lichtauskoppelfläche ebenfalls stufenartig. Insofern kann die Lichtauskoppelfläche mehrere Teilflächen aufweisen, welche jeweils entlang von Kanten aneinander anschließen, wobei die entlang einer Kante aneinander anschließenden Teilflächen im Anschlussbereich einen nicht verschwindenden Winkel miteinander einschließen.

Dies ist insbesondere dann vorteilhaft, wenn der Lichtleiter dazu ausgelegt sein soll, dass durch die Lichtauskoppelfläche ein im Wesentlichen parallelisiertes Lichtbündel austreten soll, welches nicht senkrecht zu der Lichtauskoppelfläche orientiert ist. Diese Situation tritt beispielsweise bei modernen Kfz-Beleuchtungseinrichtungen auf, bei welchen die Hauptabstrahlrichtung nicht orthogonal zu der Lichtauskoppelfläche verläuft, beispielsweise wenn die Kfz-Beleuchtungseinrichtung mit einer starken Pfeilung der Lichtauskoppelfläche im Kfz eingebaut werden soll. Ein derartiges Design ist bei modernen Kraftfahrzeugen oftmals aus stilistischen Gründen erwünscht. Außerdem wird so eine effiziente Bauraumnutzung ermöglicht. Eine zu starke Abweichung der Hauptabstrahlrichtung von der Senkrechten auf die Lichtauskoppelfläche kann jedoch grundsätzlich dazu führen, dass beim Durchtritt durch die Lichtauskoppelfläche große Fresnel-Verluste auftreten. Dies ist darauf zurückzuführen, dass die Brechung an einer geneigten Grenzfläche stets mit einer teilweisen Reflexion verbunden ist. Durch die Stufung der Lichtauskoppelfläche können einzelne Teilflächen im Wesentlichen senkrecht zu der lokal durch sie hindurchtretenden Lichtverteilung orientiert sein und so die Fresnel-Verluste minimiert werden.

Der Lichteinleitbereich dient dazu, Licht auf den Umlenkabschnitt derart einzustrahlen, dass es zu der Lichtauskoppelfläche des Auskoppelabschnitts umgelenkt wird. Der Lichteinlassbereich selbst kann hierzu eine Lichteinkoppelfläche aufweisen, welche beispielsweise von einer schmalen Seitenfläche des Parallelisierungsabschnitts gebildet ist oder an dieser ausgebildet ist.

Eine vorteilhafte Ausgestaltung ergibt sich dadurch, dass der plattenartige Parallelisierungsabschnitt eine vorzugsweise an einer ersten schmalen Seitenfläche ausgebildete Lichteinkoppelfläche aufweist, und zumindest eine an einer weiteren schmalen Seitenfläche ausgebildete Parallelisierungsfläche aufweist. Diese ist insbesondere derart ausgebildet, dass solche Lichtbündel, welche durch die Lichteinkoppelfläche eingekoppelt werden und auf die Parallelisierungsfläche treffen, nach Reflexion an der Parallelisierungsfläche in Projektion auf die Erstreckungsebene des Parallelisierungsabschnitts betrachtet, als paralleles Lichtbündel verlaufen. Dies kann z.B. dadurch erreicht werden, dass eine schmale Seitenfläche des Parallelisierungsabschnitts einen parabolischen Verlauf aufweist, wobei ein Brennpunkt der zugeordneten Parabel vorzugsweise in der Lichteinkoppelfläche liegt. Die Parallelisierungsfläche ist vorzugsweise derart an dem Lichtleiter ausgebildet, dass sie der Umlenkfläche im Wesentlichen gegenüberliegt.

Bei den vorstehend genannten Ausgestaltungen werden die für die Formung der Lichtverteilung maßgeblichen internen Totalreflexionen auf zwei verschiedene, aufeinander folgende Reflexionsflächen aufgeteilt (Parallelisierungsfläche und Umlenkfläche). Die Parallelisierungsfläche erzeugt zunächst eine parallelisierte Lichtverteilung. Bei direkter Auskopplung dieser Lichtverteilung durch eine gewölbte, gewinkelte oder nach stilistischen Vorgaben komplex verlaufende Lichtauskoppelfläche wäre eine homogene Ausleuchtung der Lichtauskoppelfläche in der Regel nicht mehr gegeben. Durch die zusätzliche Wirkung der gestuften Umlenkfläche kann die vorparallelisierte Lichtverteilung derart korrigiert werden, dass durch die Lichtauskoppelfläche die gewünschte homogene Lichtverteilung durchtritt.

Eine Parallelisierung des eingekoppelten Lichtes kann auch auf andere Weise erfolgen. So kann beispielsweise der Lichteinleitbereich des Parallelisierungsabschnitts zwar plattenartig, jedoch nicht eben, sondern im Querschnitt senkrecht zum Strahlengang gewölbt ausgebildet sein und kontinuierlich in einem plattenartigen und ebenen Lichtleitbereich des Parallelisierungsabschnitts übergehen. Durch einen geeigneten Übergang von gewölbtem zu ebenem Querschnitt kann ein in dem Lichteinleitbereich zunächst divergent verlaufendes Lichtbündel in ein parallelisiertes Lichtbündel umgeformt werden, das in dem ebenen Lichtleitbereich des Parallelisierungsabschnitts verläuft. Grundsätzlich kann eine Parallelisierung oder Kollimierung auch dadurch erzielt werden, das der Lichteinleitbereich eine Lichteinkoppelfläche und zumindest zwei gegenüberliegende und von der Lichteinkoppelfläche ausgehende Grenzflächen aufweist, welche bei Fortschreiten entlang des Strahlengangs auseinanderlaufen, so dass sich der wirksame Querschnitt des Lichteinlassbereichs erweitert.

Zur weiteren Ausgestaltung kann die Umlenkfläche und/oder die Lichtauskoppelfläche Streuelemente aufweisen, welche vorzugsweise als konvex gewölbte Vorsprünge oder konkav gewölbte Einbuchtungen ausgebildet sind.

Die eingangs gestellte Aufgabe wird außerdem durch eine Lichtleiterstruktur gemäß Anspruch 7 gelöst, welche wenigstens zwei Lichtleiter der vorstehend beschriebenen Art umfasst. Zusätzlich ist ein insbesondere plattenartiger Strukturauskoppelabschnitt vorgesehen, welcher eine schmale Vorderfläche aufweist, die die gemeinsame Lichtauskoppelfläche der einzelnen Lichtleiter bildet. Die Lichtauskoppelabschnitte der Lichtleiter münden insofern einstückig in den Strukturauskoppelabschnitt ein. Dieser weist ebenfalls breite Lichtleitflächen auf, in welche die breiten Lichtleitflächen der einzelnen Lichtleiter bzw. ihrer Lichtleitabschnitte übergehen. Dabei sind die verschiedenen Lichtleiter vorzugsweise derart mit dem Strukturauskoppelabschnitt verbunden, dass die Umlenkabschnitte und Parallelisierungsabschnitte der verschiedenen Lichtleiter voneinander beabstandet sind.

Zur Lösung der eingangs genannten Aufgabe wird außerdem eine Kfz-Beleuchtungseinrichtung vorgeschlagen, welche wenigstens eine Lichtquelle und wenigstens einen dieser zugeordneten Lichtleiter der vorstehend beschriebenen Art aufweist. Die Lichtquelle ist dabei derart angeordnet, dass das von ihr abgestrahlte Licht durch den Lichteinleitbereich in den zugeordneten Lichtleiter einspeisbar ist. Mit den beschriebenen Lichtleitern lässt sich bei der Beleuchtungseinrichtung auf vorteilhafte Weise eine starke Pfeilung realisieren. Insofern kann vorgesehen sein, dass der Lichtleiter derart ausgebildet ist, dass die von der Lichtquelle gespeiste Abstrahllichtverteilung um eine Hauptabstrahlrichtung parallelisiert ist, wobei die Lichtauskoppelfläche des Lichtleiters nicht senkrecht zu dieser Hauptabstrahlrichtung ausgerichtet ist. Auch bei einer starken Abweichung von 90° kann mit den beschriebenen Ausgestaltungen eine homogene Ausleuchtung der Lichtauskoppelfläche erzielt werden.

Weitere Einzelheiten und vorteilhafte Ausgestaltungen der Erfindung werden im Folgenden unter Bezugnahme auf die Figuren erläutert.

Es zeigen:
- Figur 1:: Perspektivische Darstellung zur Erläuterung einer erfindungsgemäßen Kfz-Beleuchtungseinrichtung mit einem erfindungsgemäßen Lichtleiter;
- Figur 2:: Darstellung gemäß Figur 1 in Draufsicht;
- Figur 3:: Perspektivische Darstellung zur Erläuterung weiterer Ausgestaltungen einer Kfz-Beleuchtungseinrichtung;
- Figur 4: Draufsicht zur Darstellung gemäß Figur 3;
- Figur 5: Kfz-Beleuchtungseinrichtung mit einer Lichtleiterstruktur umfassend mehrere Lichtleiter.

In der nachfolgenden Beschreibung sowie in den Figuren sind für identische oder einander entsprechende Merkmale jeweils dieselben Bezugszeichen verwendet.

In den Figuren sind jeweils Kfz-Beleuchtungseinrichtungen dargestellt, wobei aus Gründen der besseren Übersichtlichkeit jeweils nur eine Lichtquelle sowie ein Lichtleiter bzw. eine Lichtleiterstruktur skizziert ist.

Selbstverständlich kann die jeweilige Beleuchtungseinrichtung mehrere Lichtquelle oder weitere Bauteile umfassen, z.B. weitere optische Einrichtungen oder ein Gehäuse.

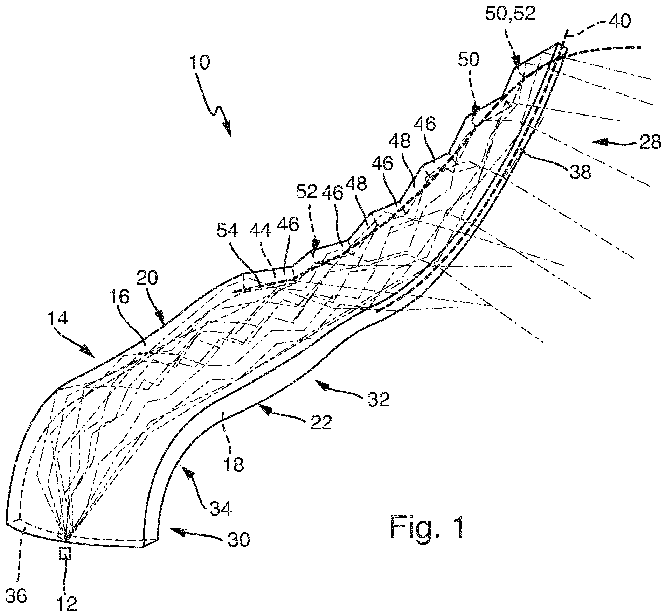

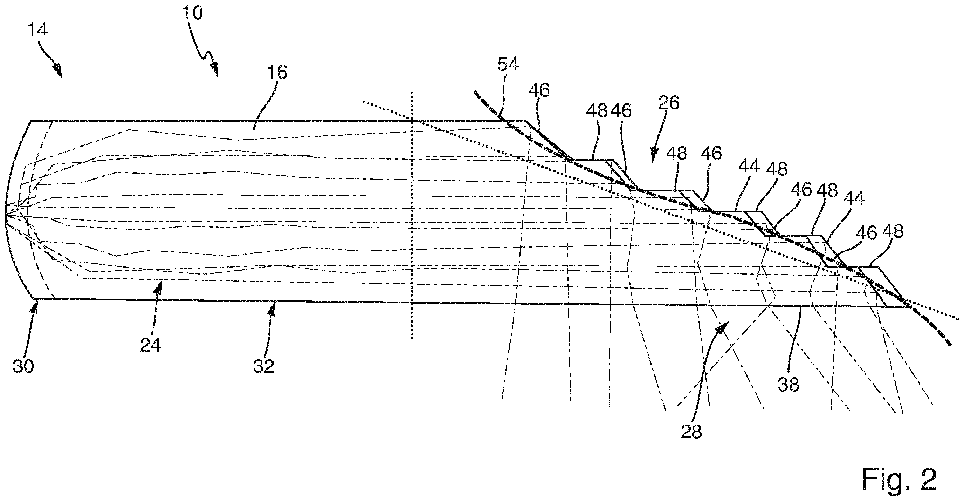

In den Figuren 1 und 2 ist eine erste Kfz-Beleuchtungseinrichtung 10 dargestellt. Diese umfasst eine Lichtquelle 12 und einen Lichtleiter 14, welcher mit dem von der Lichtquelle 12 abgestrahlten Licht gespeist wird.

Der Lichtleiter 14 ist als Ganzes betrachtet flächig und dünnwandig ausgebildet. Der Lichtleiter 14 erstreckt sich dabei jedoch nicht eben, sondern weist einen im Raum gekrümmten Verlauf auf. Er ist von einer breiten, ersten Lichtleitfläche 16 und einer dieser gegenüberliegenden breiten, zweiten Lichtleitfläche 18 begrenzt. Die erste Lichtleitfläche 16 und die zweite Lichtleitfläche 18 verlaufen im dargestellten Beispiel im Wesentlichen parallel zueinander und haben voneinander einen Abstand, welcher erheblich geringer ist, als die lateralen Ausdehnungen des Lichtleiters 14. Die erste Lichtleitfläche 16 weist einen umlaufenden, ersten Rand 20 auf. Entsprechend hat die zweite Lichtleitfläche 18 einen umlaufenden zweiten Rand 22. Zwischen den breiten Lichtleitflächen 16 und 18 erstrecken sich die schmalen Seitenflächen des Lichtleiters 14. Im dargestellten Beispiel verbinden die schmalen Seitenflächen jeweils die erste Lichtleitfläche 16 und die zweite Lichtleitfläche 18 und grenzen an den ersten Rand 20, sowie an den zweiten Rand 22 an.

Der Lichtleiter 14 ist funktional in drei Bereiche unterteilt. Diese drei Bereiche folgen aufeinander entlang eines Strahlengangs durch den Lichtleiter 14, wobei sich entlang dieses Strahlengangs im räumlichen Mittel das von der Lichtquelle 12 abgegebene und in den Lichtleiter 14 eingespeiste Licht ausbreitet. Der Lichtleiter 14 umfasst einen Parallelisierungsabschnitt 24, einen hieran im Strahlengang anschließenden Umlenkabschnitt 26, und einen hierauf im Strahlengang folgenden Auskoppelabschnitt 28 (vgl. Figur 2).

Der Parallelisierungsabschnitt 24 umfasst einen Lichteinleitbereich 30, durch welchen das Licht der Lichtquelle 12 in den Parallelisierungsabschnitt 24 und damit in den Lichtleiter 14 eingespeist werden kann. Im dargestellten Beispiel ist der Lichteinleitbereich 30 nicht eben, sondern im Querschnitt senkrecht zum Strahlengang gewölbt ausgebildet. Bei Fortschreiten entlang des Strahlengangs geht der Parallelisierungsabschnitt 24 von dem gewölbten Lichteinlassbereich 30 in einen im Wesentlichen ebenen Lichtleitbereich 32 über. Diese Ausgestaltung ist jedoch nicht zwingend, wie weiter unten noch näher erläutert.

Der Parallelisierungsabschnitt 24 ist dazu ausgebildet, das durch den Lichteinleitbereich 30 eingespeiste Licht der Lichtquelle 12 zu parallelisieren, d.h. in eine Lichtverteilung umzuformen, welche in Projektion auf die Erstreckungsflächen 16 bzw. 18 des Parallelisierungsabschnitts 24 im Wesentlichen aus parallel zueinander verlaufenden Lichtstrahlen besteht. Dies ist in Figur 2 erkennbar, welche eine Draufsicht auf die obere Lichtleitfläche 16 zeigt und in welcher beispielhaft einige Lichtstrahlen mit gestrichelten Linien dargestellt sind.

Bei der in den Figuren 1 und 2 dargestellten Ausgestaltungen wird die Parallelisierung des Lichts in dem Parallelisierungsabschnitt 24 dadurch erreicht, dass der im Querschnitt senkrecht zum Strahlengang gewölbt verlaufende Lichteinleitbereich 30 über einen zusätzlich auch in Schnitten entlang des Strahlengangs gewölbten Bereich 34 (vgl. Figur 1) in einen im Wesentlichen ebenen Lichtleitbereich 32 des Parallelisierungsabschnitts 24 übergeht. Durch eine Lichteinkoppelfläche 36 an dem Lichteinlassbereich 30 des Parallelisierungsabschnitts 24 wird das Licht der Lichtquelle 12 in Form eines divergierenden Lichtbündels in den Lichtleiter 14 eingekoppelt. Aufgrund des Übergangs von den gewölbten Bereichen 30 und 34 in den ebenen Lichtleitbereich 32 kann dieses divergierende Lichtbündel parallelisiert werden. Die Lichteinkoppelfläche 36 wird im dargestellten Beispiel von einer sich zwischen den breiten Lichtleitflächen 16 und 18 erstreckenden schmalen Seitenfläche des Lichtleiters 14 im Bereich 30 gebildet.

Der Auskoppelabschnitt 28 weist eine schmale, sich bandartig erstreckende Lichtauskoppelfläche 38 auf, durch welche das in dem Lichtleiter 14 geleitete Licht aus dem Lichtleiter 14 ausgekoppelt wird. Im dargestellten Beispiel wird die Lichtauskoppelfläche 38 von einem Abschnitt einer schmalen Seitenfläche des Lichtleiters 14 gebildet, die sich von dem Lichteinleitbereich 30 des Parallelisierungsabschnitts 24 vollständig bis an das gegenüberliegende Ende des Lichtleiters 14 im Bereich des Auskoppelabschnitts 28 erstreckt.

Die Lichtauskoppelfläche 38 erstreckt sich gekrümmt im Raum. Der Verlauf der Lichtauskoppelfläche 38 folgt hierbei einer Auskoppelleitkurve 40. Diese verläuft im dargestellten Beispiel nicht gerade, sondern weist eine Krümmung bezüglich einer Raumrichtung auf, so dass die Richtungskomponente einer Tangente an die Auskoppelleitkurve 40 bezüglich der genannten Raumrichtung bei Fortschreiten entlang der Auskoppelleitkurve 40 veränderlich ist. Zur weiteren Ausgestaltung ist außerdem möglich, dass die Auskoppelleitkurve 40 zusätzlich noch bezüglich weiterer Raumrichtungen gekrümmt ist (mehrfach gekrümmte Auskoppelleitkurve).

Die entlang der Auskoppelleitkurve 40 verlaufende Lichtauskoppelfläche 38 soll mit dem in den Lichtleiter 14 eingespeisten und in dem Parallelisierungsabschnitt 24 im Wesentlichen parallel verlaufenden Licht möglichst gleichmäßig ausgeleuchtet werden. Hierzu weist der Umlenkabschnitt 26 eine Umlenkfläche 44 auf, welche derart ausgebildet ist, dass das in dem Parallelisierungsabschnitt 24 geleitete Licht auf die Umlenkfläche 44 trifft und durch interne Totalreflexion zu der Lichtauskoppelfläche 38 gelenkt wird. Im dargestellten Beispiel ist die Umlenkfläche 44 an einer schmalen Seitenfläche des Lichtleiters 14 ausgebildet, welche der Lichtauskoppelfläche 38 im Wesentlichen gegenüberliegt.

Die Umlenkfläche 44 ist gestuft und mehrteilig aufgebaut. Sie umfasst eine Mehrzahl von Reflexionsflächen 46 und eine Mehrzahl von Versatzflächen 48. Die Reflexionsflächen sind dazu eingerichtet, das aus dem Parallelisierungsabschnitt 24 kommende Licht unter interner Totalreflexion zu der Lichtauskoppelfläche 38 zu lenken. Die Versatzflächen 48 hingegen sind dazu vorgesehen, eine stufenförmige Anordnung der Reflexionsflächen 36 zu erzielen, so dass die Umlenkfläche 44 in ihrem Verlauf von dem Parallelisierungsabschnitt 24 aus betrachtet stufenförmig ausgebildet ist. Hierzu ist im dargestellten Beispiel vorgesehen, dass zwischen je zwei benachbarten Reflexionsflächen 46 genau eine Versatzfläche 48 angeordnet ist.

Die Versatzflächen 48 sind dabei vorzugsweise derart orientiert, dass die aus dem Parallelisierungsabschnitt 24 kommende Lichtstrahlen nicht oder nur zu einem sehr geringen Teil auf die Versatzflächen 48 treffen. Die Umlenkung der Lichtstrahlen zu dem Auskoppelabschnitt 28 erfolgt daher in erster Linie mittels der Reflexionsflächen 46. Dies schließt jedoch nicht grundsätzlich aus, dass ein Teil der Lichtstrahlen auch durch Reflexion an den Versatzflächen 48 umgelenkt wird. Denkbar ist außerdem, dass zwischen zwei Reflexionsflächen 46 nicht nur genau eine Versatzfläche 48, sondern mehrere ggf. unterschiedlich orientierte Versatzflächen 48 angeordnet sind (ohne Abbildung).

Im dargestellten Beispiel sind die Reflexionsflächen 46 und die Versatzflächen 48 jeweils Flächenabschnitte der Umlenkfläche 44, welche von umlaufenden Kanten 50 begrenzt sind. Die einzelnen Reflexionsflächen 46 und/oder Versatzflächen 48 sind vorzugsweise als ebene Flächenabschnitte ausgebildet. Insbesondere erstrecken sich die einzelnen Reflexionsflächen 46 und/oder Versatzflächen 48 jeweils von der ersten Lichtleitfläche 16 zu der zweiten Lichtleitfläche 18 über die volle Dicke des Lichtleiters 14. Insofern schließen die Reflexionsflächen 46 und/oder die Versatzflächen 48 an den ersten Rand 20 einerseits und an den zweiten Rand 22 andererseits an.

Jeweils benachbarte Reflexionsflächen 46 bzw. Versatzflächen 48 stoßen mit ihren Kanten 50 derart aneinander, dass die Umlenkfläche 44 als Ganzes betrachtet an dem Übergang einen Knick 52 aufweist. Dieser ist im dargestellten Beispiel jeweils von zwei zusammen verlaufenden Kanten 50 einer Reflexionsfläche 46 bzw. einer Versatzfläche 48 gebildet.

Die gestufte Umlenkfläche 44 verläuft als Ganzes betrachtet entlang einer Umlenkleitkurve 54 (in Figuren 1 und 2 gestrichelt dargestellt). Die jeweiligen Flächenabschnitte der Umlenkfläche 44, welche die Reflexionsflächen 46 bilden, sind insofern entlang der Umlenkleitkurve 54 aufgereiht. Diese Umlenkleitkurve 54 ist gekrümmt. Dies wird z.B. dadurch erreicht, dass der Umlenkabschnitt 26 in den gekrümmt verlaufenden Auskoppelabschnitt 28 übergeht. Im dargestellten Beispiel weist die Umlenkleitkurve 54 im Wesentlichen eine S-Form auf.

Nach einem vorteilhaften Aspekt der vorliegenden Erfindung wechseln sich Reflexionsflächen 46 und Versatzflächen 48 entlang des Verlaufs der Umlenkfläche 44 stets miteinander ab.

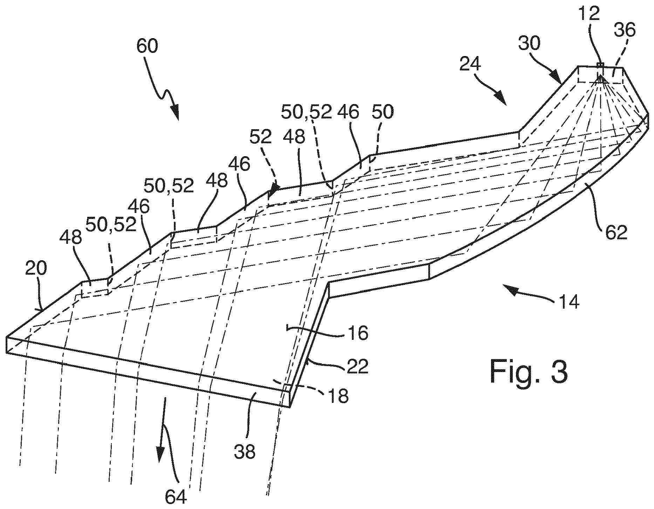

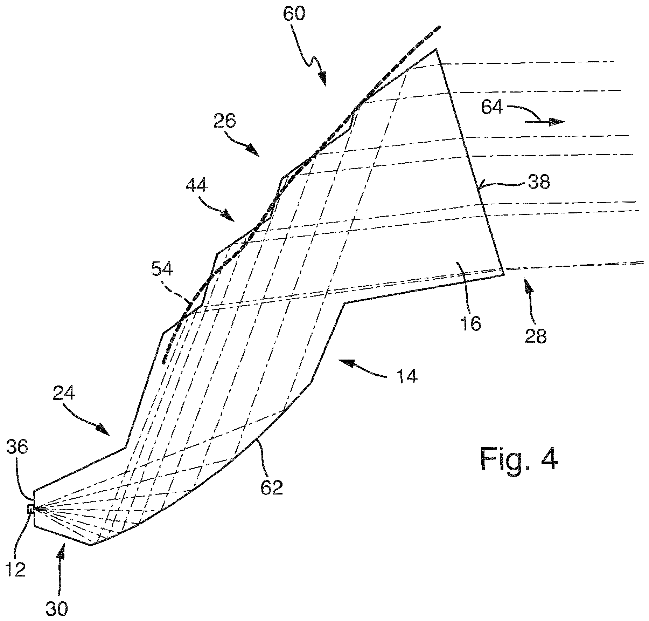

In den Figuren 3 und 4 ist eine weitere Kfz-Beleuchtungseinrichtung 60 mit einer skizzierten Lichtquelle 12 und einem Lichtleiter 14 dargestellt. Der Lichtleiter 14 weist wiederum im Strahlengang aufeinanderfolgende Abschnitte, nämlich einen Parallelisierungsabschnitt 24 mit einem Lichteinlassbereich 30, einen Umlenkabschnitt 26 und einen Auskoppelabschnitt 28 auf. Diese sind bei dem hier dargestellten Lichtleiter 14 jeweils sich plattenartig erstreckende, ebene Gebilde. Als Ganzes betrachtet, hat der Lichtleiter 14 bei dieser Ausgestaltung die Form einer dünnwandigen, ebenen Platte. Bei dieser Ausgestaltung verlaufen die ersten Lichtleitfläche 16 und die zweite Lichtleitfläche 18 daher parallel zueinander und eben. Grundsätzlich kann jedoch auch bei den im Zusammenhang mit der Beleuchtungseinrichtung 60 erläuterten Ausgestaltungen eine Krümmung und/oder Wölbung der einzelnen Abschnitte des Lichtleiters 14 vorgesehen sein.

Bei dem in den Figuren 3 und 4 dargestellten Lichtleiter 14 ist eine alternative Ausgestaltung für den Parallelisierungsabschnitt 24 realisiert. Der Parallelisierungsabschnitt 24 weist hier eine an einer ersten schmalen Seitenfläche des Lichtleiters 14 ausgebildete Lichteinkoppelfläche 36 auf, sowie eine an einer weiteren schmalen Seitenfläche des plattenartigen Parallelisierungsabschnitts 24 verlaufende Parallelisierungsfläche 62 auf.

Die Parallelisierungsfläche 62 erstreckt sich vorzugsweise über die gesamte Dicke des plattenartigen Lichtleiters 14 und verbindet die erste Lichtleitfläche 16 mit der zweiten Lichtleitfläche 18. Die Parallelisierungsfläche 62 ist derart ausgebildet, dass die von der Lichtquelle 12 ausgestrahlten und durch die Lichteinkoppelfläche 36 in den Lichteinleitbereich 30 eingekoppelten, zunächst divergierenden Lichtbündel nach Reflexion an der Parallelisierungsfläche 62 als parallelisierte Lichtbündel in den Parallelisierungsabschnitt 24 verlaufen und auf die Umlenkfläche 44 treffen. Hierzu sind die Umlenkfläche 44 und die Parallelisierungsfläche 62 im Wesentlichen gegenüberliegend an dem Lichtleiter 14 angeordnet. Die beschriebene Wirkung zur Parallelisierung des Lichts kann dadurch erreicht werden, dass die Parallelisierungsfläche 62 zumindest abschnittsweise einen (in Projektion auf die Erstreckungsebene des Lichtleiters 14 betrachtet) parabolischen Verlauf aufweist. Vorzugsweise liegt der zugeordnete Brennpunkt der zugrunde liegenden Parabel dabei in der Lichteinkoppelfläche 36 in dem Bereich, durch welchen das von der Lichtquelle 12 abgestrahlte Licht eingekoppelt wird.

In dem dargestellten Beispiel ist die Umlenkfläche 44 wiederum in ihrem Verlauf von dem Parallelisierungsabschnitt 24 zu dem Auskoppelabschnitt 28 stufig ausgebildet. Hierzu schließen abwechselnd Reflexionsflächen 46 und Versatzflächen 48 aneinander an. Die Reflexionsflächen 46 und Versatzflächen 48 sind beispielsweise jeweils eben ausgebildet und schließen miteinander einen nicht verschwindenden Winkel ein. Insofern weist die Umlenkfläche 44 am Übergang zwischen einer Reflexionsfläche 46 und einer anschließenden Versatzfläche 48 jeweils einen Knick 52 auf.

Im dargestellten Beispiel ist der Lichtleiter 14 derart ausgebildet, dass das bestimmungsgemäß in ihm geleitete Licht durch die Lichtauskoppelfläche 38 als ein um eine Hauptabstrahlrichtung 64 parallelisiertes Lichtbündel austritt. Hierbei ist es insbesondere möglich, dass die Hauptabstrahlrichtung 64 nicht senkrecht zu der Lichtauskoppelfläche 38 verläuft. Die Umlenkfläche 44 kann dann derart ausgebildet sein, dass die Reflexionsflächen 46, mittels welchen die Umlenkung des Lichts herbeigeführt wird, bei Blickrichtung entgegen der Hauptabstrahlrichtung 64 äquidistant erscheinen, d.h. insbesondere in dieser Perspektive denselben Abstand voneinander haben.

Bei sämtlichen Ausgestaltungen der hier beschriebenen Lichtleiter 14 kann es vorgesehen sein, dass die Lichtauskoppelfläche 38 ebenfalls stufenartig verläuft, beispielsweise mehrere gewinkelt zueinander verlaufende und aneinander anschließende Teilflächen aufweist. Dadurch können Reflexionsverluste verhindert werden, wenn die Hauptabstrahlrichtung 64, wie in den Figuren 3 und 4 angedeutet, einen nicht senkrechten Winkel zu dem der Lichtauskoppelfläche 38 zugrunde liegenden Verlauf aufweist.

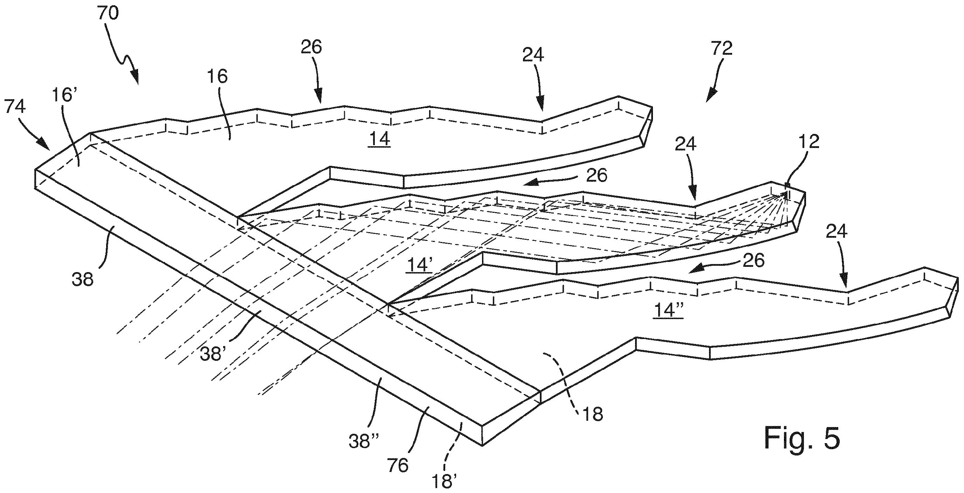

In der Figur 5 ist eine weitere Kfz-Beleuchtungseinrichtung 70 dargestellt. Bei dieser kommt nicht nur ein einzelner Lichtleiter 14, sondern eine Lichtleiterstruktur 72 zum Einsatz, welche mehrere (im dargestellten Beispiel drei) einstückig miteinander verbundene Lichtleiter 14, 14', 14" der im vorliegenden Zusammenhang beschriebenen Art umfasst. Die einzelnen Lichtleiter 14, 14', 14" sind dabei über einen gemeinsamen, ebenfalls plattenartigen Strukturauskoppelabschnitts 74 miteinander verbunden.

Der plattenartige Strukturauskoppelabschnitt 74 weist breite Lichtleitflächen 16', 18' auf, welche in die jeweiligen breiten Lichtleitflächen 16, 18 der Lichtleiter 14, 14', 14" übergehen. Außerdem hat der Strukturauskoppelabschnitt 74 eine schmale Vorderfläche 76, die als gemeinsame Lichtauskoppelfläche 38, 38', 38" der Lichtleiter 14, 14', 14" dient. Insofern stellt der Strukturauskoppelabschnitt 74 jeweils die zugehörigen Auskoppelabschnitte der Lichtleiter 14, 14', 14" bereit. Die Umlenkabschnitte 26 der einzelnen Lichtleiter 14, 14', 14" münden dabei derart in den Strukturauskoppelabschnitt 74 ein, dass die jeweiligen Lichtleiter 14, 14', 14" bzw. ihre jeweiligen Umlenkabschnitte 26 und Parallelisierungsabschnitte 24 beabstandet voneinander verlaufen.

## Patentansprüche

1. Lichtleiter (14) für eine Kfz-Beleuchtungseinrichtung (10, 60, 70), wobei der Lichtleiter (14) flächig ausgebildet und von einer ersten breiten Lichtleitfläche (16) und einer dieser gegenüberliegenden zweiten breiten Lichtleitfläche (18) begrenzt ist,
und einen Parallelisierungsabschnitt (24), einen im Strahlengang anschließenden Umlenkabschnitt (26) und einen hieran anschließenden Auskoppelabschnitt (28) aufweist, wobei der Parallelisierungsabschnitt (24) einen Lichteinleitbereich (30) aufweist und dazu ausgebildet ist, das durch den Lichteinleitbereich (30) eingespeiste Licht zu parallelisieren,
wobei der Auskoppelabschnitt (28) eine sich zwischen den breiten Lichtleitflächen (16, 18) erstreckende schmale Lichtauskoppelfläche (38) aufweist,
und wobei der Umlenkabschnitt (26) eine Umlenkfläche (44) aufweist, welche an einer sich von dem Parallelisierungsabschnitt (24) zu dem Auskoppelabschnitt (28) erstreckenden, schmalen Seitenfläche ausgebildet ist und zum Umlenken des von dem Parallelisierungsabschnitt (24) kommenden Lichtes zu dem Auskoppelabschnitt (28) eingerichtet ist, wobei die Umlenkfläche (44) eine Mehrzahl von Reflexionsflächen (46) zur Reflexion von Lichtstrahlen zu dem Auskoppelabschnitt (28) sowie eine Mehrzahl von Versatzflächen (48) umfasst, wobei zwischen je zwei Reflexionsflächen (46) zumindest eine Versatzfläche (48) derart angeordnet ist, dass die Reflexionsflächen (48) entlang des Verlaufs der Umlenkfläche (44) von dem Parallelisierungsabschnitt (24) zu dem Auskoppelabschnitt (28) stufenartig versetzt angeordnet sind,
wobei die erste breite Lichtleitfläche (16) und die zweite breite Lichtleitfläche (18) im Bereich des Umlenkabschnitts (26) derart gewölbt verlaufen, dass sich die gestufte Umlenkfläche (44) entlang einer bezüglich zweier verschiedener Raumrichtungen gekrümmten Umlenkleitkurve (54) erstreckt,
**dadurch gekennzeichnet, dass** der Lichteinleitbereich (30) plattenartig ausgebildet und jeweils in den Querschnitten senkrecht und parallel zum Strahlengang gewölbt ausgebildet ist und kontinuierlich in einen plattenartigen und ebenen Lichtleitbereich (32) des Parallelisierungsabschnitts (24) derart übergeht, dass ein in dem Lichteinleitbereich (30) zunächst divergent verlaufendes Lichtbündel in ein parallelisiertes Lichtbündel umgeformt wird, das in dem ebenen Lichtleitbereich (32) verläuft.

2. Lichtleiter (14) nach Anspruch 1, **dadurch gekennzeichnet, dass** die Versatzflächen (48) derart angeordnet sind, dass Lichtstrahlen, welche durch den Lichteinleitbereich (30) in den Parallelisierungsabschnitt (24) eingespeist werden und zu der Umlenkfläche (44) geleitet werden, nur auf die Reflexionsflächen (46), nicht aber auf die Versatzflächen (48) treffen.

3. Lichtleiter (14) nach einem der vorherigen Ansprüche, **dadurch gekennzeichnet, dass** die Reflexionsflächen (46) und die Versatzflächen (48) sich jeweils von der ersten Lichtleitfläche (16) zu der zweiten Lichtleitfläche (18) erstrecken und diese verbinden.

4. Lichtleiter (14) nach einem der vorherigen Ansprüche, **dadurch gekennzeichnet, dass** der Lichtleiter (14) derart ausgebildet ist, dass durch den Lichteinleitbereich (30) eingespeistes Licht durch die Lichtauskoppelfläche (38) um eine Hauptabstrahlrichtung (64) parallelisiert austritt, wobei die Umlenkfläche (44) derart ausgebildet ist, dass die Reflexionsflächen (46) in Projektion senkrecht zur Hauptabstrahlrichtung (64) betrachtet äquidistant sind.

5. Lichtleiter (14) nach einem der vorherigen Ansprüche, **dadurch gekennzeichnet, dass** die Lichtauskoppelfläche (38) sich bandartig entlang einer gekrümmten, insbesondere bezüglich zweier verschiedener Raumrichtungen gekrümmten, Auskoppelleitkurve (40) erstreckt.

6. Lichtleiter nach einem der vorherigen Ansprüche, **dadurch gekennzeichnet, dass** die Lichtauskoppelfläche (38) stufenartig verläuft.

7. Lichtleiterstruktur (72) umfassend eine Mehrzahl von Lichtleitern (14, 14', 14") nach einem der vorherigen Ansprüche, sowie einen insbesondere plattenartigen Strukturauskoppelabschnitt (74), welcher eine schmale Vorderfläche (76) aufweist, die eine gemeinsame Lichtauskoppelfläche (38, 38', 38") der Lichtleiter (14, 14', 14") bildet.

8. Kfz-Beleuchtungseinrichtung (10; 60, 70), mit wenigstens einer Lichtquelle (12) und wenigstens einem Lichtleiter (14) nach einem der Ansprüche 1 - 7, wobei die Lichtquelle (12) derart angeordnet ist, dass das von ihr abstrahlbare Licht durch den Lichteinleitbereich (30) in den Lichtleiter (14) einleitbar ist.

## Claims

1. Light guide (14) for a motor vehicle lighting device (10, 60, 70), the light guide (14) being flat and being delimited by a first wide light guide surface (16) and a second wide light guide surface (18) opposite thereto,
and a parallelization portion (24), a deflection portion (26) adjoining in the beam path and an outcoupling portion (28) adjoining said deflection portion,
the parallelization portion (24) having a light introduction region (30) and being designed to parallelize the light fed in through the light introduction region (30),
the outcoupling portion (28) having a narrow light outcoupling surface (38) extending between the wide light guide surfaces (16, 18),
and the deflection portion (26) having a deflection surface (44) which is formed on a narrow side surface extending from the parallelization portion (24) to the outcoupling portion (28) and being configured to deflect the light coming from the parallelization portion (24) to the outcoupling portion (28), the deflection surface (44) comprising a plurality of reflection surfaces (46) for reflecting light beams to the outcoupling portion (28), and a plurality of offset surfaces (48), between each two reflection surfaces (46) at least one offset surface (48) being arranged such that the reflection surfaces (48) are arranged so as to be offset in a step-like manner along the course of the deflection surface (44) from the parallelization portion (24) to the outcoupling portion (28),
the first wide light guide surface (16) and the second wide light guide surface (18) being curved in the region of the deflection portion (26) such that the stepped deflection surface (44) extends along a deflection guide curve (54) which is curved with respect to two different spatial directions,
**characterized in that** the light introduction region (30) is plate-like and in each case is curved in the cross sections so as to be perpendicular to and in parallel with the beam path and blends continuously into a plate-like and planar light guide region (32) of the parallelization portion (24) such that a light bundle which initially extends divergently in the light introduction region (30) is formed into a parallelized light bundle which extends in the planar light guide region (32).

2. Light guide (14) according to claim 1, **characterized in that** the offset surfaces (48) are arranged such that light beams which are fed into the parallelization portion (24) through the light introduction region (30) and are guided to the deflection surface (44) hit only the reflection surfaces (46), but not the offset surfaces (48).

3. Light guide (14) according to either of the preceding claims, **characterized in that** the reflection surfaces (46) and the offset surfaces (48) each extend from the first light guide surface (16) to the second light guide surface (18) and connect them.

4. Light guide (14) according to any of the preceding claims, **characterized in that** the light guide (14) is designed such that light fed in through the light introduction region (30) exits through the light outcoupling surface (38) in a parallel manner around a main emission direction (64), the deflection surface (44) being designed such that the reflection surfaces (46) in projection are equidistant when viewed perpendicularly to the main emission direction (64).

5. Light guide (14) according to any of the preceding claims, **characterized in that** the light outcoupling surface (38) extends in a band-like manner along a curved outcoupling guide curve (40) which is curved in particular with respect to two different spatial directions.

6. Light guide according to any of the preceding claims, **characterized in that** the light outcoupling surface (38) extends in a step-like manner.

7. Light guide structure (72) comprising a plurality of light guides (14, 14', 14") according to any of the preceding claims, as well as an in particular plate-like structure outcoupling portion (74) which has a narrow front surface (76) that forms a common light outcoupling surface (38, 38', 38") of the light guides (14, 14', 14").

8. Motor vehicle lighting device (10; 60, 70), comprising at least one light source (12) and at least one light guide (14) according to any of claims 1 to 7, wherein the light source (12) is arranged such that the light which can be emitted thereby can be introduced into the light guide (14) through the light introduction region (30) .

## Revendications

1. Conducteur optique (14) pour un dispositif d'éclairage de véhicule automobile (10, 60, 70), le conducteur optique (14) étant réalisé de manière plane et étant délimité par une première surface de guidage optique large (16) et une seconde surface de guidage optique large (18) faisant face à la première,
et comprenant une section de parallélisation (24), une section de déviation (26) lui succédant sur le trajet optique et une section de découplage (28) se raccordant à celle-ci,
la section de parallélisation (24) comprenant une région d'introduction de lumière (30) et étant conçue pour paralléliser la lumière introduite dans la région d'introduction de lumière (30),
la section de découplage (28) comprenant une surface de découplage optique étroite (38) s'étendant entre les surfaces de guidage optique larges (16, 18),
et la section de déviation (26) comprenant une surface de déviation (44) formée sur une surface latérale étroite s'étendant depuis la section de parallélisation (24) vers la section de découplage (28) et conçue pour dévier la lumière provenant de la section de parallélisation (24) vers la section de découplage (28), la surface de déviation (44) comprenant une pluralité de surfaces de réflexion (46) permettant de réfléchir des rayons lumineux vers la section de découplage (28) ainsi qu'une pluralité de surfaces de décalage (48), au moins une surface de décalage (48) étant agencée entre respectivement deux surfaces de réflexion (46) de telle manière que les surfaces de réflexion (48) soient agencées de manière décalée en escalier le long du tracé de la surface de déviation (44) depuis la section de parallélisation (24) vers la section de découplage (28),
la première surface de guidage optique large (16) et la seconde surface de guidage optique large (18) étant incurvées dans la région de la section de déviation (26) de telle manière que la surface de déviation (44) en escalier s'étende le long d'une courbe de déviation (54) incurvée par rapport à deux directions spatiales différentes,
**caractérisé en ce que** la région d'introduction de lumière (30) est réalisée en forme de plaque et, selon les coupes transversales respectives, est réalisée de manière incurvée perpendiculairement et parallèlement au trajet de faisceau, et se transforme de manière continue en une région de guidage optique (32) plane et en forme de plaque de la section de parallélisation (24) de telle manière qu'un faisceau lumineux d'abord divergent dans la région d'introduction de lumière (30) soit transformé en un faisceau lumineux parallélisé s'étendant dans la région de guidage optique (32) plane.

2. Conducteur optique (14) selon la revendication 1, **caractérisé en ce que** les surfaces de décalage (48) sont agencées de telle manière que les rayons lumineux qui sont introduits dans la section de parallélisation (24) à travers la région d'introduction de lumière (30) et qui sont dirigés vers la surface de déviation (44) ne rencontrent que les surfaces de réflexion (46) et non les surfaces de décalage (48).

3. Conducteur optique (14) selon l'une quelconque des revendications précédentes, **caractérisé en ce que** les surfaces de réflexion (46) et les surfaces de décalage (48) s'étendent respectivement de la première surface de guidage optique (16) vers la seconde surface de guidage optique (18) et les relient.

4. Conducteur optique (14) selon l'une quelconque des revendications précédentes, **caractérisé en ce que** le conducteur optique (14) est réalisé de telle manière que de la lumière introduite à travers la région d'introduction de lumière (30) sorte de manière parallélisée à travers la surface de sortie de lumière (38) autour d'une direction d'émission principale (64), la surface de déviation (44) étant réalisée de telle manière que les surfaces de réflexion (46) soient équidistantes lorsqu'elles sont considérées en projection perpendiculairement à la direction d'émission principale (64).

5. Conducteur optique (14) selon l'une quelconque des revendications précédentes, **caractérisé en ce que** la surface de découplage optique (38) s'étend à la manière d'une bande le long d'une courbe de découplage (40) incurvée, en particulier incurvée par rapport à deux directions spatiales différentes.

6. Conducteur optique (10) selon l'une quelconque des revendications précédentes, **caractérisé en ce que** la surface de sortie optique (38) s'étend en escalier.

7. Structure de conducteur optique (72) comprenant une pluralité de conducteurs optiques (14, 14', 14") selon l'une quelconque des revendications précédentes, ainsi qu'une section de découplage de structure (74), en particulier en forme de plaque, qui comprend une surface avant (76) étroite formant une surface de découplage optique (38, 38', 38") commune des conducteurs optiques (14, 14', 14").

8. Dispositif d'éclairage de véhicule (10; 60, 70) comprenant au moins une source lumineuse (12) et au moins un conducteur optique (14) selon l'une quelconque des revendications 1 à 7, la source lumineuse (12) étant disposée de façon que la lumière qu'elle est en mesure d'émettre puisse être introduite dans le conducteur optique (14) à travers la région d'introduction de lumière (30).
